# EUROPÄISCHE PATENTSCHRIFT

(11) **EP 1 118 791 B1**
(45) Veröffentlichungstag und Bekanntmachung des Hinweises auf die Patenterteilung: **07.04.2004**
(21) Anmeldenummer: 00127497.6
(22) Anmeldetag: 15.12.2000
(51) Int. Cl.: F16F 1/38

(54) **Elastomer-Metall-Gelenkbuchse**
Articulated bush comprising metal and elastomer
Articulation à manchon de métal et élastomère

(30) Priorität: 18.01.2000 DE 10001704
(43) Veröffentlichungstag der Anmeldung: 25.07.2001
(73) Patentinhaber: Jörn ELZA GmbH, 71336 Waiblingen (DE)
(72) Erfinder: Zawadzki, Bernd, 71404 Korb (DE); Schwaiger, Franz, 80997 München (DE); Stummer, Josef, 85716 Unterschleissheim (DE)
(74) Vertreter: Neubauer, Hans-Jürgen, Dipl.-Phys.

(56) Entgegenhaltungen:
- EP-A- 0 353 347
- EP-A- 0 497 701
- AT-B- 317 696
- DE-A- 2 337 872
- US-A- 3 385 543

## Beschreibung

Die Erfindung betrifft eine Elastomer-Metall-Gelenkbuchse, insbesondere als Stabilisatorendenlager eines Kraftfahrzeugs.

Eine allgemein bekannte und gattungsgemäße Elastomer-Metall-Gelenkbuchse besteht aus einem metallischen stabilen Innenteil als dickwandigem Innenrohr zur Befestigung an einem ersten Lagerteil, insbesondere an einem Fahrzeugaufbau. Das Innenteil ist von einer zylindrischen Elastomerschicht umgeben, in der etwa in einem radial mittlerem Bereich ein Zwischenblech fest angehaftet angebracht ist, das die Elastomerschicht in eine radial äußere Elastomerschicht und in eine radial innere Elastomerschicht teilt. Die Elastomer-Metall-Gelenkbuchse besteht weiter aus einem Außenrohr, das einen kleineren Innendurchmesser aufweist als der Außendurchmesser der Elastomerschicht und in das das Innenteil mit der Elastomerschicht axial eingepresst ist. Die so komplettierte Elastomer-Metall-Gelenkbuchse wird dann mit einem Presssitz unverdrehbar in ein Aufnahmeauge eines zweiten Lagerteils, insbesondere in ein Stabilisatorendenauge, eingepresst.

Konkret besteht bei dieser allgemein bekannten Elastomer-Metall-Gelenkbuchse die zylindrische Elastomerschicht aus einer separat hergestellten Gummibuchse, die als Zwischenblech ein am Umfang geschlossenes Rohrstück enthält.

In allgemein bekannter Weise ist es bei großen Belastungen, wie beispielsweise beim Einsatz einer solchen Elastomer-Metall-Gelenkbuchse als Stabilisatorendenlager eines Nutzfahrzeugs, zur Erzielung hoher Standzeiten erforderlich, das Elastomermaterial vorzuspannen. Dies wird hier dadurch ausgeführt, dass die innere Gummischicht einen kleineren Innendurchmesser aufweist als der Außendurchmesser des dickwandigen Innenrohrs und die Gummibuchse auf das Innenrohr axial aufgepresst wird. Durch die dabei entstehende radiale und teilweise axiale Gummiverdrängung wird in der inneren Elastomerschicht die Vorspannung aufgebaut. Die Vorspannung in der radial äußeren Gummischicht wird davon unabhängig dadurch aufgebaut, dass die Gummibuchse mit ihrem Zwischenrohr und ihrem im Herstellzustand größeren Außendurchmesser in das Außenrohr mit kleinerem Innendurchmesser axial eingepresst wird. Das Zwischenrohr führt zu einer Entkopplung der Vorspannungen in der inneren und äußeren Elastomerschicht, da sich diese Vorspannungen am Zwischenrohr jeweils abstützen und nicht in die jeweils andere Elastomerteilschicht übergreifen.

Zum Aufbringen der Vorspannungen sowohl in der inneren als auch in der äußeren Gummischicht sind somit zwei axiale Pressvorgänge, nämlich auf das Innenrohr und in das Außenrohr, erforderlich, so dass sowohl zwischen der Außenkontur der äußeren Elastomerschicht und der Innenkontur des Außenrohrs als auch zwischen der Innenkontur der inneren Elastomerschicht und dem Innenrohr ein Reibschluss besteht, der an beiden Reibschlussflächen die Möglichkeit eines Durchrutschens bei großen Belastungen mit großen Verdrehwinkeln ergibt.

Die vorstehend beschriebene allgemein bekannte Elastomer-Metall-Gelenkbuchse wird unter anderem auch als Stabilisatorendenlager bei Nutzfahrzeugen verwendet. Ein solches Fahrzeug wird in üblicher Weise auf dem Rücken montiert, wobei die Stabilisatorschenkel voll ausgefedert sind und anschließend wird das Fahrzeug auf die Räder gestellt. Bei modernen Fahrzeugen werden aufgrund der angestrebten Leichtbauweise Stabilisatoren mit relativ kurzen Schenkellängen verwendet, so dass in Verbindung mit weichen Blattfedern große Verdrehwinkel zwischen einem voll ausgefederten Stabilisatorschenkel bei der Fahrzeugmontage und bis zum Anschlag der Blattfeder bei vollem Einfederweg eines Stabilisatorschenkels von bis ca. 90° auftreten. Solche großen Verdrehwinkel sind bei üblichen Dimensionierungen nicht mehr nur molekular in den Gummischichten aufnehmbar. Die vorstehend beschriebenen Elastomer-Metall-Gelenkbuchse rutscht daher bei großen Belastungen durch, insbesondere nach der Fahrzeugmontage und dem Aufstellen vom Rücken auf die Räder und stellt sich damit für den Fahrbetrieb und gegebenenfalls auch bei großen Belastungen im Fahrbetrieb in eine quasi neue Nulllage ein, von der aus Gelenkbewegungen mit geringeren Schubspannungen molekular im Gummi aufgenommen werden.

Nachteilig bei der vorstehenden Gelenkbuchsenkonstruktion ist die Durchrutschmöglichkeit zwischen Innenrohr und innerer Gummischicht, da hier durch den kleinen Radius und die damit verbundene hohe Krafteinleitung ein Durchrutschen schon bei relativ kleinen Verdrehwinkeln erfolgt. Die Durchrutschmöglichkeit zwischen der äußeren Gummischicht und dem Außenrohr wird dagegen nicht oder nur wenig genützt, da wegen des größeren Radius hier die Krafteinleitung erheblich geringer ist. Eine solche Gelenkbuchse wird sich somit relativ häufig mittels Durchrutschens zwischen dem Innenrohr und der inneren Gummischicht in eine quasi neue Nulllage schon bei relativ geringen Verdrehwinkeln während des Fahrbetriebs einstellen. Ein solches häufiges Durchrutschen führt zu einer erhöhten Gelenkbuchsenbelastung mit einem nachteilig erhöhten Gummiabrieb und mit einer Standzeitverringerung.

Zudem sind Elastomer-Metall-Gelenkbuchsen als sogenannte Schlitzbuchsen bekannt (DE 23 37 872 C2), bei denen eine zylindrische Gummischicht festhaftend auf ein Innenrohr aufvulkanisiert ist. Die Gummischicht ist umgeben von einem festhaftend aufvulkanisierten Außenblech, das zudem mit einem äußeren Gummifilm versehen ist. Durch das Außenblech und bis weit hinein in die Gummischicht erstreckt sich ein Längsschlitz. Eine ähnliche Ausführungsform mit zwei gegenüberliegenden V-förmigen Längsschlitzen und halbschalenförmigen Zwischenblechen, die durch die Längsschlitze längsgeteilt sind, ist ebenfalls bekannt (AT-PS 317.696). Diese Schlitzbuchsen werden unmittelbar in ein im Durchmesser kleineres Aufnahmeauge als zweites Lagerteil, beispielsweise in ein Stabilisatorendenauge eingepresst, wobei der oder die Längsschlitze geschlossen werden und eine Vorspannung insgesamt in der Gummischicht aufgebaut wird. Diese Vorspannung ist so dimensioniert, dass eine verdrehfeste Reibschlussverbindung zwischen der Gelenkbuchse und dem Aufnahmeauge hergestellt wird, da hier ein Durchrutschen aufgrund der gegebenen Konstruktion nur zu sehr geringen Standzeiten führen würde. Für die vorstehend genannten großen Verdrehwinkel von bis zu ca. 90° sind diese Lager mit rein molekularer Belastungsaufnahme ohne Durchrutschmöglichkeit nicht geeignet.

Aufgabe der Erfindung ist es eine eingangs genannte, gattungsgemäße Elastomer-Metall-Gelenkbuchse so weiterzubilden, dass bei reduziertem Montageaufwand höhere Lagerstandzeiten erzielbar sind.

Diese Aufgabe wird mit den Merkmalen des Anspruchs 1 gelöst.

Gemäß Anspruch 1 ist die Elastomerschicht mit dem Innenteil festhaftend zu einer Innenteil-Elastomer-Buchse verbunden. Die Elastomerschicht und auch das Zwischenblech weisen im Herstellzustand der Innenteil-Elastomer-Buchse jeweils wenigstens einen einander zugeordneten Längsschlitz auf. Der Längsschlitz erstreckt sich dabei durch die radial äußere Elastomerschicht und das Zwischenblech bis in die innere Elastomerschicht dergestalt, dass sich beim Einpressen der Innenteil-Elastomer-Buchse in das Außenrohr und der damit verbundenen allseitigen radialen Durchmesserverkleinerung der Innenteil-Elastomer-Buchse, der Längsschlitz in der Elastomerschicht und im Zwischenblech schließt. Das Zwischenblech wird dabei zu einer geschlossenen Rohrform gebogen und das Elastomermaterial wird durch die Durchmesserverkleinerung radial und axial verdrängt. Dabei wird sowohl in der radial äußeren Elastomerschicht als auch in der radial inneren Elastomerschicht, in die sich im Herstellzustand ebenfalls der Längsspalt erstreckt, die erforderliche Vorspannung aufgebaut.

Gegenüber dem Stand der Technik wird somit nur durch einen Einpressvorgang auch in der inneren Elastomerschicht die erforderliche Vorspannung aufgebaut, so dass vorteilhaft ein axialer Einpressvorgang entfallen kann. Da die innere Elastomerschicht auf dem Innenteil fest angehaftet ist, besteht hier keine Durchrutschmöglichkeit. Vorteilhaft besteht die Durchrutschmöglichkeit somit ausschließlich zwischen der äußeren Elastomerschicht und dem Außenrohr mit einem relativ großen radialen Abstand zur Schwenkachse. Damit wird bei Vorspannungen in der Elastomerschicht, die in der Größe den Vorspannungen nach dem Stand der Technik entsprechen, die Durchrutschhäufigkeit im Fahrbetrieb reduziert, so dass bei weniger Elastomermaterialverschleiß eine Standzeitverbesserung erzielt wird.

Als Elastomermaterial wird vorzugsweise Gummi verwendet, wobei die festhaftenden Verbindungen durch Vulkanisation hergestellt sind. Grundsätzlich können auch andere, an sich bekannte Elastomermaterialien verwendet werden, wobei die festhaftenden Verbindungen beispielsweise durch Klebungen hergestellt sein können.

Gemäß Anspruch 2 soll der wenigstens eine Längsschlitz V-förmig ausgebildet sein, wobei die V-Spitze im radial äußeren Bereich des Innenteils liegt, d. h. der Schlitz nahezu vollständig durch die Schichtdicke der inneren Elastomerschicht durchgeht, wobei sich dann der Längsschlitz nach radial außen V-förmig erweitert. Nach Anspruch 3 hat sich ein V-Winkel von etwa 60° als geeignet erwiesen.

Regelmäßig ist ein einziger Längsschlitz ausreichend, je nach den Gegebenheiten können jedoch auch mehrere Längsschlitze, insbesondere zwei radial gegenüberliegende Längsschlitze vorgesehen werden.

Nach Anspruch 4 sind am Zwischenblech an beiden Stirnseiten, vorzugsweise jeweils vier um 90° versetzte Abstützungen vorgesehen gegenüber denen der Längsschlitz eine bestimmte Winkellage, vorzugsweise von 45° aufweist. Diese Abstützungen können entweder als Erhebungen oder Vertiefungen ausgebildet sein und dienen zur Justierung und Halterung des Zwischenblechs im Vulkanisierwerkzeug für den Vulkanisiervorgang.

Nach Anspruch 5 wird eine Ausbildung der inneren und äußeren Schicht im Herstellzustand der Innenteil-Elastomer-Buchse mit einer Ringausnehmung bzw. einem Versatz vorgeschlagen dergestalt, dass unter Vorspannung der Elastomerschicht, deren Stirnseiten etwa bündig mit den Stirnseiten des Zwischenblechs und des Außenrohrs verlaufen. Eine geringe Einwölbung kann dabei verbleiben. Eine Auswölbung ist jedoch nicht zulässig, da dies bei kardanischen Einfederungen dort zu hohen Materialbelastungen mit Abscherungen führen würde.

In einer besonders bevorzugten Weiterbildung nach Anspruch 6 ist das Außenrohr jeweils stirnseitig umlaufend zu einem Stützsteg nach radial innen umgebördelt, wobei die Stützstege den radial äußeren Bereich der äußeren Elastomerschicht seitlich umfassen und radial abstützen. Damit wird vorteilhaft ein betriebsmäßig, insbesondere aufgrund kardanischer Bewegungen mögliches, axiales Auswandern der Elastomerschicht aus dem Außenrohr verhindert. Um axiale und kardanische Bewegungen der Gelenkbuchse zu ermöglichen, ist das Innenteil länger als das Außenrohr ausgeführt.

Anhand einer Zeichnung wird die Erfindung näher erläutert.

Es zeigen:
- Fig. 1: eine schematische Querschnittansicht durch eine Innenteil-Elastomer-Buchse einer Elastomer-Metall-Gelenkbuchse,
- Fig. 2: eine schematische Draufsicht auf die Innenteil-Elastomer-Buchse der Fig. 1,
- Fig. 3: eine vergrößerte, schematische Detaildarstellung der Einzelheit X der Fig. 1,
- Fig. 4: eine vergrößerte, schematische Detaildarstellung der Einzelheit Y der Fig. 1, und
- Fig. 5: eine schematische Seitenansicht einer in ein Stabilisatorendenauge eingepressten Elastomer-Metall-Gelenkbuchse.

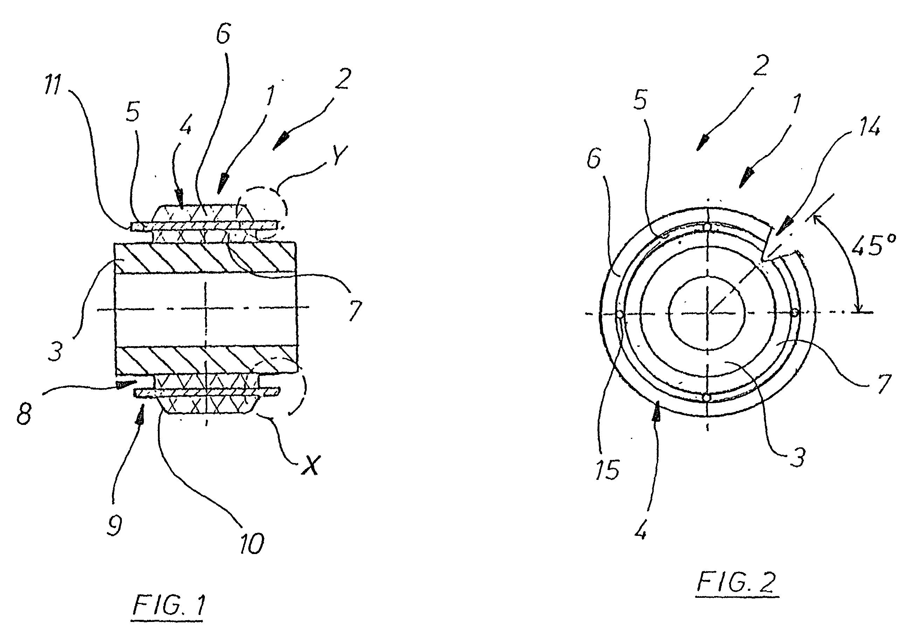

In der Fig. 1 ist eine schematische Querschnittansicht durch eine Innenteil-Elastomer-Buchse 1 als Bestandteil einer Elastomer-Metall-Gelenkbuchse 2 dargestellt. In der Fig. 2 ist eine Draufsicht auf diese Innenteil-Elastomer-Buchse 1 ebenfalls schematisch dargestellt.

Wie dies den Fig. 1 und 2 entnommen werden kann, ist die Innenteil-Elastomer-Buchse 1 aus einem dickwandigen zylindrischen Innenrohr 3 aufgebaut, das von einer zylindrischen Elastomerschicht umgeben ist. Die zylindrische Elastomerschicht 4 ist mit dem zylindrischen Innenrohr 3 festhaftend verbunden.

Wie dies insbesondere aus der Fig. 1 ersichtlich ist, weist die zylindrische Elastomerschicht 4 ein in etwa in einem radial mittleren Bereich angeordnetes und fest angehaftetes Zwischenblech 5 auf, das die zylindrische Elastomerschicht 4 in eine radial äußere Elastomerschicht 6 und in eine radial innere Elastomerschicht 7 teilt.

Im in der Fig. 1 dargestellten Herstellzustand weist die Innenteil-Elastomer-Buchse 1 in der inneren Elastomerschicht 7 eine stirnseitig umlaufende Ringausnehmung 8 zwischen dem zylindrischen Innenrohr 3 und dem Zwischenblech 5 auf. Dagegen weist die äußere Elastomerschicht 6 jeweils einen seitlichen Versatz 9 mit Abflachung 10 gegenüber den Zwischenblechstirnseiten 11 auf.

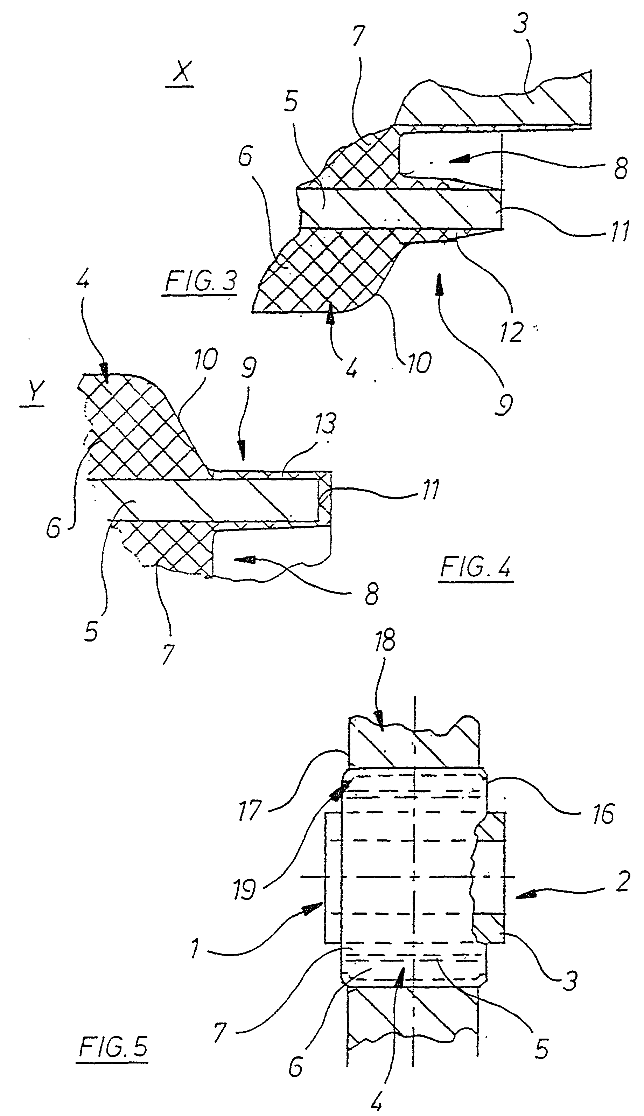

Wie dies aus der in der Fig. 3 schematisch dargestellten, vergrößerten Detaildarstellung der Einzelheit X der Fig. 1 ersichtlich ist, ist das Zwischenblech 5 von der Elastomerschicht 4 ausgehend zu der Zwischenblechstirnseite 11 hin mit einer dünnen Elastomerschicht 12 abgedeckt, die zur Zwischenblechstirnseite 11 hin zudem noch konisch abgeschrägt ist. Wie dies insbesondere aus der Fig. 4 ersichtlich ist, die eine vergrößerte Detaildarstellung der Einzelheit Y der Fig. 1 zeigt, kann zusätzlich oder alternativ auch vorgesehen sein, dass der über die äußere Elastomerschicht 6 und die innere Elastomerschicht 7 überstehende Bereich des Zwischenblechs 5 vollständig von einer dünnen Elastomerschicht 13 ummantelt ist.

Aus der Fig. 2 ist ferner ersichtlich, dass die zylindrische Elastomerschicht 4 und das Zwischenblech 5 im in der Fig. 2 dargestellten Herstellzustand der Innenteil-Elastomer-Buchse 1 jeweils einen einander zugeordneten V-förmigen Längsschlitz 14 aufweisen, der sich durch die radial äußere Elastomerschicht 6 und das Zwischenblech 5 hindurch bis in die innere Elastomerschicht 7 erstreckt. Der V-Winkel des V-förmigen Längsschlitzes 14 beträgt dabei in etwa 60°.

Wie dies aus der Fig. 2 weiter ersichtlich ist, sind am Zwischenblech 5 an den Zwischenblechstirnseiten 11 vier um 90° versetzte Abstützungen 15 vorgesehen, wobei die beiden längsschlitznahen Abstützungen 15 gegenüber dem V-förmigen Längsschlitz jeweils um 45° versetzt sind. Diese Abstützungen 15 dienen zur Justierung und Halterung des Zwischenblechs 5 im hier nicht dargestellten Vulkanisierwerkzeug für den Vulkanisiervorgang.

Zur Ausbildung einer Elastomer-Metall-Gelenkbuchse 2 ist die Innenteil-Elastomer-Buchse 1 in ein in der Fig. 5 dargestelltes Außenrohr 16, das einen kleineren Innendurchmesser aufweist als der Außendurchmesser der Elastomerschicht 4, axial eingepresst. Wie dies aus der Fig. 5 weiter ersichtlich ist, ist die Elastomer-Metall-Gelenkbuchse 2 ferner mit einem Presssitz unverdrehbar in ein Stabilisatorendenauge 17 eines Stabilisators 18 eingepresst.

Beim Einpressen der Innenteil-Elastomer-Buchse 1 in das Außenrohr 16 verringert sich der radiale Durchmesser der Innenteil-Elastomer-Buchse 1, wodurch der V-förmige Längsschlitz 14 in der zylindrischen Elastomerschicht 4 und im Zwischenblech 5 geschlossen wird. Dabei wird sowohl in der radial äußeren Elastomerschicht 6 als auch in der radial inneren Elastomerschicht 7 eine Vorspannung aufgebaut, so dass insgesamt mit nur einem einzigen Einpressvorgang auch in der inneren Elastomerschicht 7 die erforderliche Vorspannung aufgebaut werden kann.

Durch die feste Anhaftung der zylindrischen Elastomerschicht 4 auf dem zylindrischen Innenrohr 3 besteht in diesem Bereich keine Durchrutschmöglichkeit. Eine Durchrutschmöglichkeit ist somit ausschließlich zwischen der äußeren Elastomerschicht 6 und dem Außenrohr 16 möglich.

Wie dies aus der Fig. 5 weiter ersichtlich ist, sind das Zwischenblech 5 und das Außenrohr 16 in etwa gleich lang ausgebildet, während das zylindrische Innenrohr 3 axial länger ausgebildet ist als das Zwischenblech 5 und das Außenrohr 16. Die Ringausnehmung 8 und der seitliche Versatz 9 mit Abflachung 10 sind dabei so dimensioniert, dass bei komplett montierter Elastomer-Metall-Gelenkbuchse 2 die Elastomerschichtstirnseiten in etwa bündig mit den Zwischenblechstirnseiten 11 und den Stirnseiten des Außenrohrs 16 verlaufen, was hier allerdings nicht dargestellt ist.

Wie dies in der Fig. 5 lediglich äußerst schematisch dargestellt ist, kann das Außenrohr 16 jeweils stirnseitig umlaufend zu einem Stützsteg 19 nach radial innen umgebördelt werden, wobei die Stützstege 19 den radial äußeren Bereich der äußeren Elastomerschicht 6 seitlich umfassen und radial abstützen. Damit wird ein gegebenenfalls betriebsmäßig mögliches axiales Auswandern der zylindrischen Elastomerschicht 4 aus dem Außenrohr 16, z. B. aufgrund kardanischer Bewegungen, verhindert.

## Patentansprüche

1. Elastomer-Metall-Gelenkbuchse, insbesondere als Stabilisatorendenlager eines Kraftfahrzeugs
mit einem metallischen stabilen Innenteil (3) als dickwandiges Innenrohr oder Bolzen zur Befestigung an einem ersten Lagerteil, insbesondere an einem Fahrzeugaufbau,
mit einer das Innenteil umgebenden zylindrischen Elastomerschicht (4) mit einem etwa in einem radial mittleren Bereich der Elastomerschicht angebrachten und fest angehafteten Zwischenblech (5), das die Elastomerschicht in eine radial äußere Elastomerschicht (6) und in eine radial innere Elastomerschicht (7) teilt, und
mit einem Außenrohr (16), das einen kleineren Innendurchmesser aufweist als der Außendurchmesser der Elastomerschicht und in das das Innenteil mit der Elastomerschicht zur Komplettierung der Elastomer-Metall-Gelenkbuchse axial eingepresst ist, wobei die komplett montierte Elastomer-Metall-Gelenkbuchse mit einem Presssitz unverdrehbar in ein Aufnahmeauge eines zweiten Lagerteils, insbesondere in ein Stabilisatorendenauge einpressbar ist,
**dadurch gekennzeichnet,**
**dass** die Elastomerschicht (4) mit dem Innenteil (3) festhaftend zu einer Innenteil-Elastomer-Buchse (1) verbunden ist,
**dass** die Elastomerschicht (4) und das Zwischenblech (5) im Herstellzustand der Innenteil-Elastomer-Buchse (1) je wenigstens einen einander zugeordneten Längsschlitz (14) aufweisen, der sich durch die radial äußere Elastomerschicht (6) und das Zwischenblech (5) bis in die innere Elastomerschicht (7) erstreckt dergestalt, dass sich beim Einpressen der Innenteil-Elastomer-Buchse (1) in das Außenrohr (16) und der damit verbundenen allseitigen radialen Durchmesserverkleinerung der Innenteil-Elastomer-Buchse (1) der Längsschlitz (14) in der Elastomerschicht (4) und im Zwischenblech (5) schließt, wobei sowohl in der radial äußeren Elastomerschicht (6) als auch in der radial inneren Elastomerschicht (7) eine Vorspannung aufgebaut wird.

2. Elastomer-Metall-Gelenkbuchse nach Anspruch 1, **dadurch gekennzeichnet, dass** der wenigstens eine Längsschlitz (14) V-förmig ausgebildet ist, wobei die V-Spitze im radial äußeren Bereich des Innenteils liegt und sich der Längsschlitz nach radial außen erweitert.

3. Elastomer-Metall-Gelenkbuchse nach Anspruch 2, **dadurch gekennzeichnet, dass** der V-Winkel etwa 60° beträgt.

4. Elastomer-Metall-Gelenkbuchse nach einem der Ansprüche 1 bis 3, **dadurch gekennzeichnet, dass** am Zwischenblech (5) an beiden Stirnseiten (11) Abstützungen (15), vorzugsweise jeweils vier um jeweils 90° versetzte Abstützungen (15) vorgesehen sind, gegenüber denen der Längsschlitz (14) eine bestimmte Winkellage aufweist.

5. Elastomer-Metall-Gelenkbuchse nach einem der Ansprüche 1 bis 4, **dadurch gekennzeichnet,**
**dass** im Herstellzustand die Innenteil-Elastomer-Buchse (1) in der inneren Elastomerschicht (7) jeweils eine stirnseitig umlaufende Ringausnehmung (8) zwischen Innenteil (3) und Zwischenblech (5) aufweist und die äußere Elastomerschicht (6) jeweils einen seitlichen Versatz (9) mit Abflachung (10) gegenüber den Zwischenblechstirnseiten (11) aufweist, und
**dass** das Zwischenblech (5) und das Außenrohr (16) etwa gleich lang sind und das Innenteil (3) demgegenüber axial länger ist, wobei die Ringausnehmung (8) und der Versatz (9) mit Abflachung (10) in der Elastomerschicht (4) so dimensioniert sind, dass im komplett montierten Zustand die Elastomerschichtstirnseiten etwa bündig mit den Stirnseiten des Zwischenblechs (5) und des Außenrohrs (16) verlaufen.

6. Elastomer-Metall-Gelenkbuchse nach einem der Ansprüche 1 bis 5, **dadurch gekennzeichnet, dass** das Außenrohr (16) jeweils stirnseitig umlaufend zu einem Stützsteg (19) nach radial innen umgebördelt ist, wobei die Stützstege (19) jeweils den radial äußeren Bereich der äußeren Elastomerschicht (6) seitlich umfassen und axial abstützen.

## Claims

1. Elastomer/metal pivoting bush, in particular as a stabilizer end bearing of a motor vehicle, having a metallic, stable inner part (3) in the form of a thick-walled inner tube or bolt for fastening to a first bearing part and in particular to a vehicle body, having a cylindrical elastomer layer (4) which surrounds the inner part and has an intermediate plate (5), which is fitted and attached in a firmly adhering manner approximately in a radially central region of the elastomer layer and divides the elastomer layer into a radially outer elastomer layer (6) and into a radially inner elastomer layer (7), and having an outer tube (16) which has a smaller inside diameter than the outside diameter of the elastomer layer and into which the inner part is pressed axially together with the elastomer layer in order to complete the elastomer/metal pivoting bush, it being possible for the completely assembled elastomer/metal pivoting bush to be pressed non-rotatably into a locating eye of a second bearing part, in particular into a stabilizer end eye, with a press fit, **characterized in that** the elastomer layer (4) is connected to the inner part (3) in a firmly adhering manner to form an inner part/elastomer bush (1), **in that**, in the production state of the inner part/elastomer bush (1), the elastomer layer (4) and the intermediate plate (5) each have at least one mutually assigned longitudinal slot (14) which extends through the radially outer elastomer layer (6) and the intermediate plate (5) and into the inner elastomer layer (7) in such a manner that, when the inner part/elastomer bush (1) is pressed into the outer tube (16) and the associated radial reduction in the diameter of the inner part/elastomer bush (1) on all sides takes place, the longitudinal slot (14) in the elastomer layer (4) and in the intermediate plate (5) is closed, in which case a prestress is built up both in the radially outer elastomer layer (6) and in the radially inner elastomer layer (7).

2. Elastomer/metal pivoting bush according to Claim 1, **characterized in that** the at least one longitudinal slot (14) is of V-shaped design, the V-tip lying in the radially outer region of the inner part, and the longitudinal slot being expanded radially outwards.

3. Elastomer/metal pivoting bush according to Claim 2, **characterized in that** the V angle is approximately 60°.

4. Elastomer/metal pivoting bush according to one of Claims 1 to 3, **characterized in that** supports (15), preferably in each case four supports (15) which are offset by 90° in each case, are provided on both end sides (11) of the intermediate plate (5), the longitudinal slot (14) being at a certain angular position with respect to the said supports.

5. Elastomer/metal pivoting bush according to one of Claims 1 to 4, **characterized in that**, in the production state, the inner part/elastomer bush (1) has, in the inner elastomer layer (7), an annular recess (8) which encircles it in each case on the end side between the inner part (3) and intermediate plate (5), and the outer elastomer layer (6) has in each case a lateral offset (9) with a flattened section (10) with respect to the intermediate-plate end sides (11), and **in that** the intermediate plate (5) and the outer tube (16) are approximately the same length and the inner part (3) is longer axially in comparison, the annular recess (8) and the offset (9) with the flattened section (10) being dimensioned in the elastomer layer (4) in such a manner that, in the completely assembled state, the elastomer-layer end sides run approximately flush with the end sides of the intermediate plate (5) and of the outer tube (16).

6. Elastomer/metal pivoting bush according to one of Claims 1 to 5, **characterized in that** the outer tube (16) is flanged radially inwards in each case in a manner such that it encircles the end side to form a supporting web (19), the supporting webs (19) in each case laterally surrounding and axially supporting the radially outer region of the outer elastomer layer (6).

## Revendications

1. Manchon d'articulation en métal et élastomère, en particulier sous la forme de paliers d'extrémité de stabilisateurs d'un véhicule automobile
avec une partie intérieure (3) stable métallique, réalisée sous la forme de tube intérieur à paroi épaisse ou de boulon pour la fixation sur une première partie de palier, en particulier sur une carrosserie de véhicule,
avec une couche en élastomère (14), cylindrique, entourant la partie intérieure, avec une tôle intermédiaire (5) montée à peu près dans une zone radialement médiane de la couche en élastomère et mise en adhésion fermement, tôle intermédiaire qui divise la couche en élastomère en une couche en élastomère radialement extérieure (6) et une couche en élastomère radialement intérieure (7), et
avec un tube extérieur (16), présentant un plus petit diamètre intérieur que le diamètre extérieur de la couche en élastomère et dans lequel la partie intérieure, munie de la couche en élastomère, est enfoncée axialement dans le but de compléter le manchon d'articulation en métal et élastomère, le manchon d'articulation en métal et élastomère complètement monté étant susceptible d'être enfoncé, avec un ajustement avec serrage, de façon immobilisée en rotation, dans un oeillet de logement d'une deuxième partie de palier, en particulier dans un oeillet d'extrémité de stabilisateur,
**caractérisé en ce que**
la couche en élastomère (4) est reliée à la partie intérieure (3), en étant immobilisée par adhésion, pour former un manchon en élastomère pour partie intérieure (1),
**en ce que** la couche en élastomère (4) et la tôle intermédiaire (5) présentent, à l'état de fabrication du manchon en élastomère pour partie intérieure (1), respectivement au moins une fente longitudinale (14) associé à chaque autre, qui s'étend à travers la couche en élastomère (6) radialement extérieure et la tôle intermédiaire (5) jusqu'à la couche en élastomère intérieure (7), **en ce que**, lors de l'enfoncement du manchon en élastomère pour partie intérieure (1) dans le tube extérieur (16) et lors de la diminution de diamètre radial, se faisant de tous côtés, lui étant liée, du manchon en élastomère pour partie intérieure (1), la fente longitudinale (14), réalisée dans la couche en élastomère (4) et dans la tôle intermédiaire (5), se ferme, sachant que, tant dans la couche en élastomère (6) radialement extérieure, qu'également dans la couche en élastomère (7) radialement intérieure, est établie une précontrainte.

2. Manchon d'articulation en métal et élastomère selon la revendication 1, **caractérisé en ce que** la au moins une fente longitudinale (14) est conformée en V, la pointe étant située dans la zone radialement extérieure de la partie intérieure et la fente longitudinale allant en s'élargissant en allant en direction radiale vers l'extérieur.

3. Manchon d'articulation en métal et élastomère selon la revendication 2, **caractérisé en ce que** l'angle du V est d'à peu près 60°.

4. Manchon d'articulation en métal et élastomère selon l'une des revendications 1 à 3, **caractérisé en ce que**, sur la tôle intermédiaire (5), sur les deux faces frontales (11), sont prévus des appuis (15), de préférence chaque fois quatre appuis (15), décalés chacun à 90°, par rapport auxquels la fente longitudinale (14) présente une position angulaire déterminée.

5. Manchon d'articulation en métal et élastomère selon l'une des revendications 1 à 4, **caractérisé en ce qu'**à l'état de fabrication, le manchon en élastomère pour partie intérieure (1), dans la couche en élastomère intérieure (7), présente respectivement un évidement annulaire (8) frontal de pourtour, entre la partie intérieure (3) et la tôle intermédiaire (5), et la couche en élastomère extérieure (6) présente respectivement un décalage latéral (9), avec un méplat (10) par rapport aux faces frontales de tôle intermédiaire (11), et
**en ce que** la tôle intermédiaire (5) et le tube extérieur (16) sont de longueurs à peu près identiques et la partie intérieure (3), par contre, étant axialement plus longue, l'évidement annulaire (8) et le décalage (9), avec le méplat (10) ménagé dans la couche en élastomère (4), étant de dimensions faisant que, à l'état complètement monté les faces frontales de couche en élastomère s'étendent à peu près en affleurement avec les faces frontales de la tôle intermédiaire (5) et du tube extérieur (16).

6. Manchon d'articulation en métal et élastomère selon l'une des revendications 1 à 5, **caractérisé en ce que** le tube extérieur (16) est chaque fois rabattu radialement vers l'intérieur, frontalement, sur le pourtour, pour former une nervure d'appui (19), les nervures d'appui (19) entourant latéralement et soutenant axialement respectivement la zone radialement extérieure de la couche en élastomère extérieure (6).
